(19) Europäisches Patentamt
European Patent Office
Office européen des brevets

(11) **EP 2 346 040 A1**

(12) **EUROPEAN PATENT APPLICATION**

(43) Date of publication:
**20.07.2011 Bulletin 2011/29**

(51) Int Cl.:
**G11B 7/013** (2006.01)    **G11B 7/242** (2006.01)
**G11B 7/007** (2006.01)

(21) Application number: **10305020.9**

(22) Date of filing: **08.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Thomson Licensing**
**92130 Issy-les-Moulineaux (FR)**

(72) Inventors:
• **Knittel, Joachim**
**78532 Tuttlingen (DE)**

• **Knappmann, Stephan**
**78658 Zimmern ob Rottweil (DE)**
• **Khrushchev, Sergey**
**78089 Unterkirnach (DE)**

(74) Representative: **Arnold, Klaus-Peter**
**Deutsche Thomson OHG**
**European Patent Operations**
**Karl-Wiechert-Allee 74**
**30625 Hannover (DE)**

(54) **Optical storage medium comprising a super-resolution layer and a read-only data layer**

(57)    The optical storage medium comprises a substrate layer (2), a read-only data layer (3) having a pit/land data structure with data arranged in tracks on the substrate layer (2), a thermal layer (5) disposed on the data layer (3), and a super-resolution layer (6) disposed on the thermal layer (5) comprising a nonlinear material for providing a super-resolution effect. The thermal layer (5) and the super-resolution layer (6) each have a thickness being smaller than the depth of the pits, and the pits are arranged with steep walls for isolating the nonlinear material (33) disposed in the pits (30) from the nonlinear material (34) disposed on the surrounding land area of the pits (30). The thermal layer comprises in particular a dielectric layer and/or a metallic layer.

Fig. 3

## Description

### TECHNICAL FIELD OF THE INVENTION

The present invention relates to an optical storage medium comprising a substrate layer, a read-only data layer having a pit/land data structure with data arranged in tracks on the substrate layer, a thermal layer disposed on the data layer, and a super-resolution layer disposed on the thermal layer. The data layer comprises in particular pits and lands having a size below an optical resolution limit of a pickup for reading of the data.

### BACKGROUND OF THE INVENTION

Optical storage media are media in which data are stored in an optically readable manner, for example by means of a laser and an optical detector, for example a photodetector, being integrated within a pickup. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R, as well as rewritable formats like CD-RW, DVD-RW and DVD+RW. Digital data are stored on these media along tracks in one or more layers of the media.

The storage medium with the highest data capacity is at present the Blu-Ray disc (BD), which allows to store up to about 50 GB on a dual layer disc. For reading and writing of a Blu-Ray disc an optical pickup with a laser wavelength of 405 nm and a numerical aperture of 0,85 is used. On the Blu-Ray disc a track pitch of 320 nm and a mark length from 2T to 8T or 9T is used, where T is the channel bit length and wherein 2T corresponds with a minimum mark length of 138, 149 or 160 nm.

The diffraction limit of optical instruments as described by the Abbe theory is about lambda/2NA, which is lambda/2NA=238nm for a Blu-Ray type pickup having a laser wavelength lambda = 405nm and a numerical aperture NA=0,85. For the optical resolution limit of a pickup for the readout of the high frequency (HF) data signal of a Blu-Ray disc, a higher resolution can be obtained, when the laser beam moves over the pits and lands of a track on the Blu-Ray disc. By using a sensitive detection method, very small amplitude changes can be detected with regard to the different reflectivity of pits and lands, which allows to detect pits with a Blu-Ray type pickup, which have a size of about lambda/4NA=120nm.

New optical storage media with a super-resolution structure offer the possibility to increase the data density of the optical storage medium by a factor of two to four in one dimension as compared with the Blu-Ray disc. This is possible by including a super-resolution layer, which is placed above a data layer of the optical storage medium, and which significantly reduces the effective size of a light spot used for reading from or writing to the optical storage medium. The super-resolution layer can be understood as a mask layer because it is arranged above the data layer and for some specific materials only the high intensity center part of a laser beam can penetrate the mask layer. Further, semiconductor materials can be used as a super-resolution layer, e.g. InSb, which show a higher reflectivity in the center part of the focused laser beam, whereas the center reflectivity is dependent on the pit structure of the corresponding data layer. Therefore, the super-resolution effect allows to record and read data stored in pits of an optical disc, which have a size below the optical resolution limit of lambda/4NA of a corresponding optical pickup.

The super-resolution layer is often called a super-resolution near-field structure (Super-RENS) layer because it is assumed that for some specific materials, the optical effect of reducing the effective spot size of the laser beam is based on a near-field interaction between the marks and spaces of the data layer and the super-resolution layer. Super-RENS optical discs comprising a super-resolution near-field structure formed of a metal oxide, a semiconductor material, a polymer compound or a phase change layer comprising GeSbTe or AgInSbTe are known.

### BRIEF SUMMARY OF THE INVENTION

The optical storage medium comprises a substrate layer, a read-only data layer having a pit/land data structure with data arranged in tracks on the substrate layer, a thermal layer disposed on the data layer, and a super-resolution layer disposed on the thermal layer, wherein the super-resolution layer comprises a nonlinear material for providing a super-resolution effect. The thermal layer and the super-resolution layer each have a thickness being smaller than the depth of the pits and the pits are arranged with steep walls for isolating the nonlinear material disposed in the pits from the nonlinear material disposed on the surrounding land area of the pits. The super-resolution layer in particular has the function of a mask layer for the data layer.

The walls of the pits have for example a steepness with a taper angle being larger than 75° and the thickness of the thermal layer at the walls of the pits is advantageously at least a factor of 2 smaller than the thickness of the thermal layer in the pits and on the surrounding land area of the pits. Here it is important to notice that especially for very steep wall angles close to 90° the layer thickness of the pit walls should be measured perpendicular to the wall surface.

Also the thickness of the super-resolution layer at the walls of the pits is advantageously at least a factor of two smaller than the thickness of the super-resolution layer in the pits and on the surrounding land area of the pits. A thermal layer and super-resolution layer of this kind can be provided for the optical storage medium by using a respective sputtering process.

The nonlinear material is for example a chalcogenide material or a semiconductor material. The bottom of the pits is therefore thermally or electrically decoupled from the surrounding land area of the pits because the thermal conductivity, respectively the electrical conductivity, is reduced at the walls because the thickness of the thermal layer as disposed on the walls of the pits is strongly reduced.

In a preferred embodiment, the thermal layer comprises a metallic layer and a dielectric layer in case a chalcogenide material is used as the nonlinear material, and in case a semiconductor material is used as the nonlinear material, the thermal layer comprises a dielectric layer.

For the embodiment using a chalcogenide material as the nonlinear material, the heat dissipation of the nonlinear material disposed in the pits is therefore smaller than the heat dissipation of the nonlinear material disposed on the surrounding land area of the pits. In case the nonlinear material is a semiconductor material, the diffusion of the electrons elevated to the conducting band is essentially restricted within the bottom of the pits, when the optical storage medium is irradiated with a laser beam for reading of respective data. The threshold for providing the super-resolution effect is reduced therefore and a lower laser power can be used for reading of the data of the optical storage medium. The heat respectively the free carriers are accumulated in particular within the pits of the data layer. Because of thermally coupling respectively electrically coupling of the nonlinear material disposed outside of the pits, the respective temperature increase outside of the pits is less pronounced with regard to the temperature increase of the nonlinear material disposed within the pits. The lifetime of the optical storage medium can be extended therefore. Also an increased resolution is obtained which allows to increase the data density of the optical storage medium.

**BRIEF DESCRIPTION OF THE DRAWINGS**

Preferred embodiments of the invention are explained in more detail below by way of example with reference to schematic drawings, which show:

Fig. 1    an optical storage medium comprising a super-resolution layer and a read-only data layer with a pit structure in a cross section,

Fig. 2    a single pit of the optical storage medium of figure 1 in a cross section,

Fig. 3    a more detailed structure of a single pit of the optical storage medium of figure 1 comprising a dielectric layer as a thermal layer, in a cross section,

Fig. 4    a perpendicular view of the optical storage medium of figure 1, indicating an active and an inactive pit inside a laser spot,

Fig. 5    the pit structure of figure 4 in a cross section, and

Fig. 6    simulation results for an optical storage medium according to figure 1.

**DETAILED DESCRIPTION OF PREFERRED EMBODIMENTS**

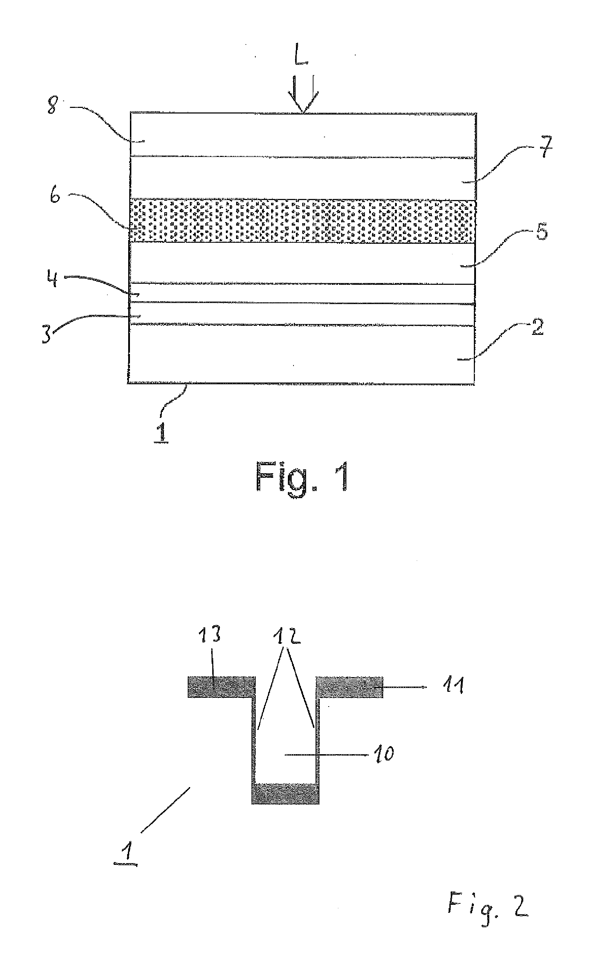

In Fig. 1 an optical storage medium 1 is shown in a cross section in a simplified manner, not to scale. The optical storage medium 1 is in particular a read-only (ROM) optical storage disc and comprises a substrate layer 2 on which an data layer 3 is arranged. The data layer 3 has a data structure consisting of pits and lands being arranged in essentially parallel tracks, the pits being molded or embossed on the surface of substrate layer 2 for representing the data layer 3.

On the data layer 3 a first dielectric layer 5 is arranged as a protection layer. In addition, a reflective metallic layer 4, for example an aluminum layer, may be arranged between the dielectric layer 5 and the data layer 3. On the dielectric layer 5, a super-resolution layer 6 comprising a nonlinear material is disposed for providing the function of a mask layer for utilizing a super-resolution effect, e.g. a super-resolution near-field structure (Super-RENS) effect. The optical storage medium 1 comprises further a cover layer 8 as a protection of the storage medium 1 and at least a second dielectric layer 7 arranged between the cover layer 8 and the super-resolution layer 6.

The first and second dielectric layers 5, 7 comprise for example the material $ZnS-SiO_2$. The substrate layer 2 and the cover layer 8 may consist of a plastic material, as known from DVDs and CDs. The layers of the storage medium 1 are arranged particularly as a layer stack. The optical storage medium 1 is for example an optical disc having outside dimensions similar to a Blu-Ray disc. For reading the data of the data layer 3, a laser beam L is applied to the top of the storage medium 1, penetrating first the cover layer 8.

The super-resolution effect allows detecting pits, which have a size, in particular a length, which is below the optical resolution limit of a corresponding apparatus for reading of the data of the optical storage medium. It has been demonstrated that the super-resolution detection of an optical disc comprising a phase-change material, also other nonlinear materials like semiconductor materials, is related to a local change of the optical properties of the super-resolution layer 6. For phase-change materials, for example AgInSbTe, it is assumed that the temperature increase due to the focussed laser spot is responsible for the super-resolution effect, which provides an aperture only in a small center of the laser spot. This is a priori due to a low thermal conductivity and a strong optical non-linearity of the material.

This effect is also assumed for other chalcogenide materials, which comprise a chalcogen element like sulphur, selenium, tellurium and one or several electropositive elements like arsenic, germanium, phosphor or antimony. The chalcogenide materials are glasslike materials which show two stable phases, an amorphous and a crystalline phase. By heating a chalcogenide material with a high intensity laser beam, a phase transition from the crystalline to the amorphous phase is provided. For a super-resolution optical disc comprising a chalcogenide material, the intensity of the laser beam of a corresponding optical pickup is adjusted such, that only for a small center part of the laser spot on the storage medium a phase transition is provided for providing an "aperture type" super-resolution effect. Most likely the active phase of the super-resolution effect is the liquid phase which is from a microscopic or band structure point of view comparable to the amorphous phase. After readout, the chalcogenide material cools down and goes back to the crystalline phase. Therefore, it is assumed that the optical contrast between liquid phase and crystalline phase is important for the super-resolution detection.

Another preferred nonlinear material for the super-resolution layer 6 is for example an InSb alloy. An optical storage medium comprising InSb as a super-resolution layer shows an increase in reflectivity, when irradiating with a higher laser power. This can be explained by transitions of electrons from the valence band to the conduction band of InSb. A semiconductor with a high electron density in the conduction band has a high reflectivity for light, comparable to a metal. The electron density in the conduction band can be further increased by using an n-doping material, for example selenium or tellurium, for doping of the semiconductor. The reflective metallic layer 4 is omitted, when InSb as the nonlinear material is used. In addition, also the InSb material has a thermal dependence of optical parameters like refractive index and reflection.

To reduce the heat dissipation within the pits or the dissipation of free carriers of the nonlinear material disposed in the pits, the pits are arranged with steep walls for isolating the nonlinear material disposed in the pits from the nonlinear material disposed on the surrounding land area of the pits. The bottom of the pits is therefore at least partly thermally or electrically decoupled from the surrounding land with the result that the heat or the electrons are accumulated in the nonlinear material disposed in the pits.

The threshold temperature as required for providing the super-resolution effect in case of phase-change material, for example a chalcogenide material like GeSbTe or AgInSbTe, can be obtained therefore with a lower laser power. The temperature of the nonlinear material disposed on the surrounding land area outside of the pits will not increase to the same extend with regard to the nonlinear material within the pits because of thermally coupling with the dielectric layer 5 and/or reflective layer 4 having a higher thermal conductivity with regard to the plastic material of the substrate layer 2 and the cover layer 8.

In case a semiconductor material, for example one of the III-V semiconductor family, i.e. GaSb or an indium alloy like InAs or InSb, is used as the nonlinear material, the diffusion of the electrons in the conduction band is reduced within the pits with regard to the electrons of the nonlinear material disposed on the surrounding land area outside of the pits and therefore the threshold laser power as required for providing the super-resolution effect of the semiconductor material is correspondingly lower.

This situation is illustrated schematically for a single pit 10 of the optical storage medium 1 as shown in Fig. 2: a thermal layer 11 is disposed with a defined thickness within the pit 10 and on the surrounding land area 13 of the pit 10 such that the material disposed at the walls 12 is strongly reduced. The pit 10 comprises advantageously very steep walls, which can be made with a stamper being manufactured by using for example a Nano-Imprint Lithography method. The thermal layer 11 is sputtered onto the optical storage medium 1 by using a well collimated sputtering beam, so that only little material of the thermal layer 11 is deposited on the steep walls 12. When in a next step the nonlinear material for the super-resolution layer 6, not shown in Fig. 2, is disposed on the optical storage medium 1, the nonlinear material as disposed in the pit 10 is effectively decoupled from the nonlinear material disposed on the surrounding land area 13.

This effect is especially effective with the smallest pits: they contain only a small volume of the nonlinear material, which is confined to a small surface within the pits. Therefore, these pits will reach the threshold for the super-resolution detection at a lower power level than the larger pits. The large pits may be detected in a conventional way and the laser power can be optimized for example for the smallest pits only. This leads to a lower laser power leading to an increased long term stability of the storage medium 1, e.g. to an increased number of readout cycles. This effect can be further enhanced by making the walls of the large pits less steep so that they are homogeneously covered with the thermal layer to increase the thermal coupling.

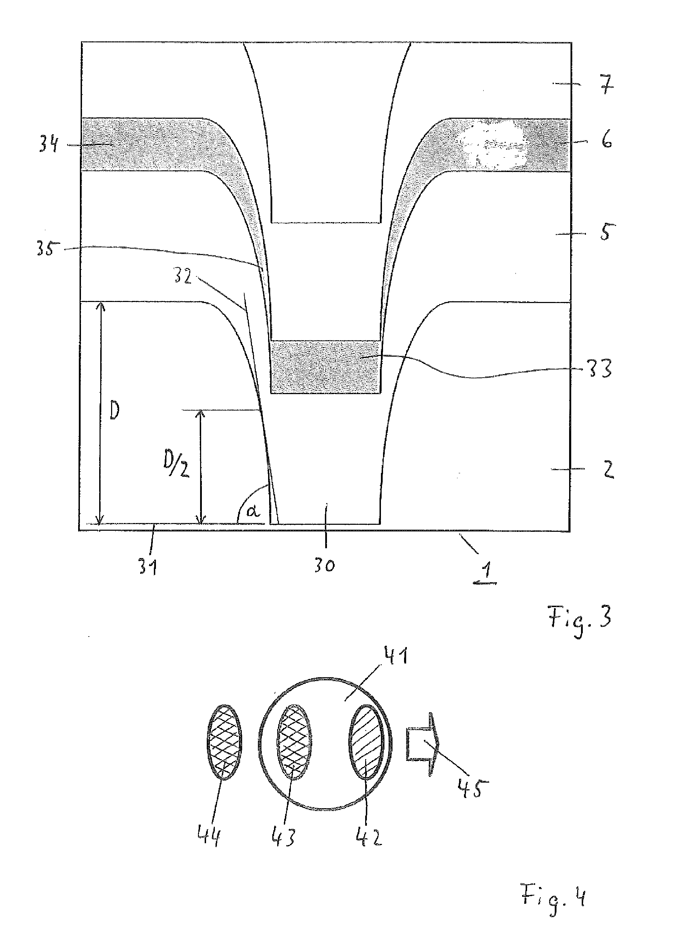

The walls of the pits of the data layer 3 of the optical storage medium 1 of Fig. 1 have e.g. a steepness with a taper angle being larger than 75°. The taper angle is the angle formed by the surface of the walls of the pit and the bottom surface of the pit. The manufacturing of pits with a desired taper angle for an optical disc is described for example in EP-A-1315665. In case the walls of the pits have a curved form, as shown in Fig. 3, a taper angle $\alpha$ can be defined as the angle between a bottom surface 31 of pit 30 and a taper surface 32 corresponding with the tangent of the wall at a height of D/2, wherein D is the depth of pit 30.

The super-resolution layer 6 disposed on the thermal layer 5 comprises in the embodiment of Fig. 3 a semiconductor material, for example InSb, and the thermal layer 5 is a dielectric layer. The layers 2 and 7 of the optical storage medium 1 of Fig. 3 correspond with the layers as shown in Fig. 1. The super-resolution layer 6 has for example a thickness within a range of 15-30 nm and the thermal layer 5 a thickness of smaller than 50 nm. D is for example within a range of 60-100 nm. The depth of the pits of the optical storage medium 1 is in particular larger than the thickness of the dielectric layer 5 and the super-resolution layer 6.

As can be clearly seen, the nonlinear material InSb 33 disposed within the pit 30 is separated from the nonlinear material 34 disposed outside the pit 30 due to the steep walls and a correspondingly low coverage 35 of the InSb material at the walls. Therefore, when laser light of a corresponding pickup for reading of the data impinges on pit 30, electrons are elevated from the valence band of the InSb material to the conduction band, but the diffusion of the electrons of the conduction band is concentrated to the nonlinear material 33 within the pit 30 due to the low coverage 35 of the InSb material at the walls.

By using an electron beam mastering method (Electron-Beam-Lithography, EBL) and a Nano-Imprint Lithography (NIL) method, a stamper can be manufactured, via which the optical storage medium 1 can be manufacturing having pits with very steep walls. For disposing the dielectric layers 5, 7 and the super-resolution layer 6 on the substrate layer 2, the sputtering can be done in such a way that layers are produced having essentially a homogeneous thickness in the pits and on the surrounding land area of the pits, but wherein only little or essentially no material is deposited on the sidewalls of the pits.

Fig. 4 shows schematically how a laser spot 41 for reading of respective data moves over super-resolution pits 42, 43, 44 having a size being below the optical resolution limit of the corresponding pickup. Arrow 45 indicates the direction of the movement of the laser spot 41. Even though the laser spot 41 covers the two pits 42, 43, essentially only pit 43 influences the intensity of the reflected light because the laser spot 41 has just covered the pit 42 and the light intensity as received by pit 42 is still not sufficient for triggering the super-resolution effect of pit 42. The pit 43 is already illuminated for a longer time and the nonlinear material deposited in the pit 43 has accumulated sufficient heat or carriers for triggering the super-resolution effect, which effect provides for example a reflectivity change. As the heat dissipation or carrier dissipation of the nonlinear material within the pits 42-44 is comparatively low with regard to the movement of the laser spot 41, the pit 44 may still be in the same state as pit 43 even after the passage of the laser spot 41.

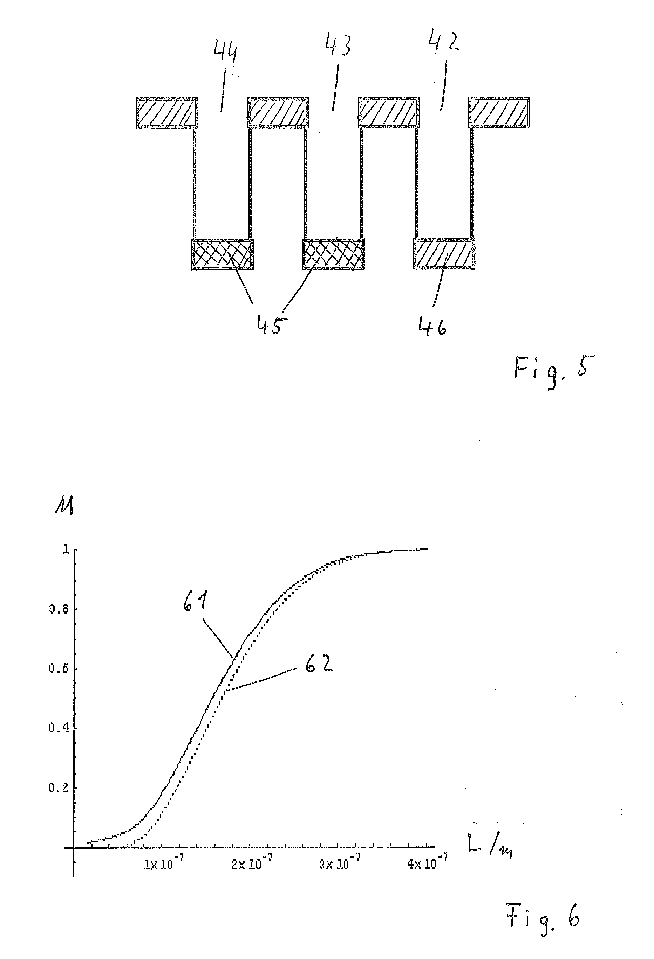

In Fig. 5 the pits 42-44 of Fig. 4 are shown in a cross-section. As indicated, the nonlinear material 45 deposited in the pits 43, 44 has changed optical properties due to the super-resolution effect, whereas the nonlinear material 46 of pit 42 has not yet accumulated sufficient light intensity for providing the super-resolution effect. In case a semiconductor material is used for the nonlinear material, the steep walls of the pits will not only reduce the thermal conductivity, but also the diffusion of the electrons as elevated to the conduction band, which electrons are responsible for the reflectivity change of the semiconductor material. Because of thermally coupling respectively electrically coupling of the nonlinear material disposed outside of the pits, the respective temperature increase outside of the pits is less pronounced with regard to the temperature increase of the nonlinear material as disposed within the pits. The lifetime of the optical storage medium can be increased therefore.

In Fig. 6 the result of a simulation is shown to demonstrate the resolution increase of the optical storage medium provided by the invention with regard to a conventional super-resolution disc. The graph 61 shows the modulation M of the optical storage medium of the invention and the graph 62 the modulation M of the conventional super-resolution disc as a function of the pit size L. The modulation M is defined as

$$M = (I\_on - I\_off) / (I\_off)$$

and is normalized to 1 for large pit sizes L. The following parameters are used for the simulation: reflectivity of the conventional super-resolution disc: r_pit = 2, r_land = 1, and for the super-resolution disc of the invention: r_pit_switched_off= 1.5, r_pit_switched_on= 2, r_land=1 with I = intensity of the laser beam. The expressions "switched_on" and "switched_off" represent the super-resolution effect being on respectively being off for a pit of a selected pit size. The numerical aperture NA of the pickup is 0.85 and the laser wavelength 405nm. The resolution increase depends in particular on the nonlinear properties of the nonlinear material, and the values chosen here are only for illustration of the principle and a higher resolution may be easily obtained.

As can be seen from Fig. 6, a considerable modulation increase can be obtained in particular for the smallest pit sizes. Provided that a minimum modulation of 0.1 is needed, the optical storage medium according to the invention allows to reduce the minimum pit size by about 20% with regard to a conventional super-resolution disc, which leads to a capacity increase by a factor of 1,56. In the simulation it is assumed that the nonlinear material as disposed in the entire pit changes into "switched on" status when the center of the beam spot has passed the center of the pit and that the pit stays in "switched on" status after the beam spot has passed the pit. If the pit returns immediately into the "switched off" status after the center of the beam spot has passed, the resolution would be further enhanced. For example, under the assumption that r_pit_switched_off=1, the capacity increase would be a factor of 4.

While the present invention has been shown and described particularly with reference to exemplary embodiments thereof, it will be understood by those of ordinary skill in the art that various changes in form and details may be made therein without departing from the spirit and scope of the present invention, as defined by the claims herein after appended.

## Claims

1. Optical storage medium comprising
   a substrate layer (2),
   a read-only data layer (3) having a pit/land data structure with data arranged in tracks on the substrate layer (2),
   a thermal layer (4, 5) disposed on the data layer (3), and
   a super-resolution layer (6) disposed on the thermal layer (4, 5) comprising a nonlinear material for providing a super-resolution effect, wherein
   the thermal layer (4, 5) and the super-resolution layer (6) each have a homogeneous thickness being smaller than the depth of the pits (10, 30, 42-44), and the pits (30) are arranged with steep walls for isolating the nonlinear material (33) disposed in the pits from the nonlinear material (34) disposed on the surrounding land area of the pits (30).

2. The optical storage medium of claim 1, **wherein** the walls of the pits have a steepness with a taper angle being larger than 75°.

3. The optical storage medium of claim 1 or 2, **wherein** the thickness of the thermal layer (4, 5) at the walls of the pits is at least a factor of two smaller than the thickness of the thermal layer (4, 5) in the pits and on the surrounding land area of the pits.

4. The optical storage medium of claim 1, 2 or 3, **wherein** the thickness of the super-resolution layer (6) at the walls of the pits is at least a factor of two smaller than the thickness of the super-resolution layer (6) in the pits and on the surrounding land area of the pits.

5. The optical storage medium of one of the preceding claims, **wherein** the heat dissipation of the nonlinear material disposed in the pits is reduced with regard to the heat dissipation of the nonlinear material disposed on the surrounding land area of the pits.

6. The optical storage medium of one of the preceding claims, **wherein** the thermal layer comprises a dielectric layer (5) and/or a metallic layer (4).

7. The optical storage medium of one of the preceding claims 1 - 5, **comprising** a second thermal layer (5) being a dielectric layer and wherein the first thermal layer (4) is a metallic layer.

8. The optical storage medium of one of the preceding claims, **wherein** the data layer comprises tracks with pits and lands having a size above an optical resolution limit of a pickup for reading of the data and pits and lands having a size below the optical resolution limit, and wherein the pits having a size above the optical resolution limit have walls with a taper angle which is smaller than the taper angle for the pits having a size below the optical resolution limit.

9. The optical storage medium of one of the preceding claims, **wherein** the nonlinear material comprises a phase-change material, for example a chalcogenide material like GeSbTe or AgInSbTe.

10. The optical storage medium of one of the preceding claims 1-8, **wherein** the nonlinear material comprises a semiconductor material, in particular one of the III-V semiconductor family, for example GaSb or an indium alloy like InAs or InSb.

11. The optical storage medium of claim 10, **wherein** the diffusion of the electrons elevated to the conducting band within the bottom of the pits, when the optical storage medium is irradiated with a laser beam for reading of respective data, is reduced with regard to the diffusion of the electrons elevated to the conducting band of the nonlinear material disposed on the surrounding land area of the pits.

12. The optical storage medium of one of the preceding claims, **comprising** a cover layer (8) and a dielectric layer (7) arranged between the super-resolution layer (6) and the cover layer (8), the storage medium being designed for operation with a laser beam penetrating first the cover layer (8).

13. The optical storage medium of one of the preceding claims, **wherein** a sputtering process is used for disposing the thermal layer (4, 5) and the super-resolution layer (6).

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 10 30 5020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 950 759 A1 (DEUTSCHE THOMSON OHG [DE]) 30 July 2008 (2008-07-30)<br>* the whole document *<br>----- | 1-9,<br>11-13<br>10 | INV.<br>G11B7/013<br>G11B7/242<br>G11B7/007 |
| X<br>A | US 2008/159119 A1 (MINEMURA HIROYUKI [JP] ET AL) 3 July 2008 (2008-07-03)<br>* figures 4, 9A *<br>----- | 1-6,9-13<br>7,8 | |
| A | US 2008/205236 A1 (SHINTANI TOSHIMICHI [JP] ET AL) 28 August 2008 (2008-08-28)<br>* paragraph [0018] - paragraph [0055]; figures 4-7 *<br>----- | 1-13 | |
| Y<br>A | EP 2 109 104 A1 (DEUTSCHE THOMSON OHG [DE]) 14 October 2009 (2009-10-14)<br>* paragraphs [0011], [0020], [0029]; figure 4 *<br>----- | 10<br>1-9,<br>11-13 | |

TECHNICAL FIELDS
SEARCHED (IPC)

G11B

The present search report has been drawn up for all claims

| Place of search | Date of completion of the search | Examiner |
|---|---|---|
| Munich | 10 May 2010 | Moje, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 30 5020

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2010

| Patent document cited in search report | | Publication date | Patent family member(s) | | Publication date |
|---|---|---|---|---|---|
| EP 1950759 | A1 | 30-07-2008 | CN | 101583999 A | 18-11-2009 |
| | | | EP | 2106609 A1 | 07-10-2009 |
| | | | WO | 2008090104 A1 | 31-07-2008 |
| | | | US | 2010062203 A1 | 11-03-2010 |
| US 2008159119 | A1 | 03-07-2008 | CN | 101211605 A | 02-07-2008 |
| | | | JP | 2008165927 A | 17-07-2008 |
| US 2008205236 | A1 | 28-08-2008 | CN | 101256790 A | 03-09-2008 |
| | | | JP | 2008210485 A | 11-09-2008 |
| EP 2109104 | A1 | 14-10-2009 | WO | 2009124735 A1 | 15-10-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1315665 A